(19) Europäisches Patentamt
European Patent Office
Office européen des brevets

(11) Numéro de publication: **0 077 227**
**A1**

(12) # DEMANDE DE BREVET EUROPEEN

(21) Numéro de dépôt: **82401675.2**

(22) Date de dépôt: **15.09.82**

(51) Int. Cl.³: **C 08 J 7/18**, C 08 F 291/02, F 16 F 9/08

(30) Priorité: **18.09.81 FR 8117653**

(43) Date de publication de la demande: **20.04.83 Bulletin 83/16**

(84) Etats contractants désignés: **DE FR GB IT**

(71) Demandeur: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Berthet, Jeanne, 1, Allée du Roussillon, F-78140 Velizy Villacoublay (FR)**
Inventeur: **Gaussens, Gilbert, 11, rue Jean Brunet, F-92190 Meudon (FR)**
Inventeur: **Noaillac, Jean Roch, 3, Clos Pérault, F-91200 Athis-Mons (FR)**

(74) Mandataire: **Mongrédien, André et al, c/o BREVATOME 25, rue de Ponthieu, F-75008 Paris (FR)**

(54) **Elément séparateur en elastomère, son procédé de préparation et son utilisation dans les systèmes de suspension hydropneumatique.**

(57) L'invention a pour objet un élément séparateur en élastomère, son procédé de préparation et son utilisation dans les systèmes de suspension hydropneumatiques.

Cet élément comprend une membrane en élastomère greffé par des monomères monoinsaturés et/ou polyinsaturés choisis dans le groupe comprenant l'acide acrylique, l'acrylate d'éthylène glycol, l'acrylonitrile, la vinylpyrrolidone, le diacrylate d'hexane diol, le diacrylate de diéthylène glycol, le diacrylate de tétraéthylène glycol et le diacrylate de polyéthylène glycol. Il est obtenu en imprégnant une membrane d'élastomère par exemple de polyuréthane, de monomères tels que l'acrylonitrile et en soumettant ensuite à une irradiation au moyen de rayonnements ionisants la membrane imprégnée.

EP 0 077 227 A1

L'invention a pour objet un élément séparateur en élastomère destiné notamment à assurer la séparation entre une phase liquide et une phase gazeuse.

Elle vise également le procédé de fabrication de cet élément et ses applications.

On connaît déjà des éléments du genre en question ; ils se présentent sous la forme de membranes en polyuréthane et trouvent une utilisation dans le domaine des "systèmes de suspension hydropneumatiques" pour véhicules automobiles, dans lesquels ils séparent une phase liquide d'une phase gazeuse, et doivent présenter de ce fait une perméabilité aux gaz la plus faible possible.

Les séparateurs connus présentent une perméabilité aux gaz qui est déjà faible ; une diminution supplémentaire de cette perméabilité est toutefois souhaitée, notamment lorsque les pressions et températures rencontrées dans les systèmes hydropneumatiques concernés augmentent.

Les recherches faites dans ce sens n'ont pas jusqu'à ce jour été couronnées de succès.

L'invention a donc pour but, de fournir des éléments séparateurs du genre en question dont la perméabilité aux gaz est encore plus faible que celle des éléments qui existent déjà et dont les propriétés mécaniques, notamment les contraintes pour un allongement donné, demeurent compatibles avec les applications envisagées.

A cet effet, l'élément séparateur selon l'invention se caractérise en ce qu'il comprend une membrane en élastomère choisi dans le groupe comprenant les polyuréthanes, les polychloroprènes, les silicones, les polymères éthylène-acryliques tels que les copolymères d'éthylène et d'acrylate de méthyle,

les polyisobutylènes, les polynorbornènes, les polybutadiène-acrylonitriles, les polybutadiènes, les polyisobutylène-isoprènes, les polyisoprènes, les polyéthylènes chlorosulfonés, les poly (éthylène-propylène), les poly (éthylène-propylène-diène) et les polysulfures d'éthylène, ledit élastomère étant greffé par des monomères monoinsaturés et/ou polyinsaturés choisis dans le groupe comprenant l'acide acrylique, l'acrylate d'éthylène glycol, l'acrylonitrile, la vinylpyrrolidone, le diacrylate d'hexane diol, le diacrylate de diéthylène glycol, le diacrylate de tétraéthylène glycol et le diacrylate de polyéthylène glycol.

Dans l'élément séparateur de l'invention, le fait d'utiliser une membrane en élastomère greffée par des monomères monoinsaturés et/ou polyinsaturés permet d'obtenir une perméabilité aux gaz plus faible que celles des membranes en élastomère non greffé, tout en conservant des propriétés mécaniques, notamment des propriétés élastiques, acceptables.

En effet, lorsque le monomère greffé est un monomère polyinsaturé, on obtient une diminution de perméabilité par resserrement du réseau macromoléculaire de l'élastomère en raison de sa réticulation ; lorsque le monomère greffé est un monomère monoinsaturé, cette diminution de perméabilité provient surtout d'un bouchage des pores de la membrane en élastomère par les greffons. Ainsi, la réduction de perméabilité de la membrane dépend principalement du taux de monomères greffés sur l'élastomère.

Avantageusement, ce taux est de 2 à 30% en poids par rapport au poids d'élastomère.

Par ailleurs, le fait d'utiliser selon l'invention, les monomères précités comme monomères greffés permet d'obtenir cette diminution de perméabilité sans pour autant diminuer les propriétés mécaniques de l'élastomère, notamment ses propriétés élastiques. Le choix du monomère utilisé influe également sur la diminution de perméabilité.

Selon l'invention, lorsque l'élastomère est un polyuréthane, le monomère greffé est de préférence l'acrylonitrile.

L'invention a également pour objet un procédé de préparation d'un élément séparateur en élastomère répondant aux caractéristiques précitées.

Ce procédé se caractérise en ce que l'on imprègne une membrane en élastomère de monomères monoinsaturés et/ou polyinsaturés choisis dans le groupe comprenant l'acide acrylique, l'acrylate d'éthylène glycol, l'acrylonitrile, la vinylpyrrolidone, le diacrylate d'hexane diol, le diacrylate de diéthylène glycol, le diacrylate de tétraéthylène glycol, et le diacrylate de polyéthylène glycol, et en ce que l'on soumet à une irradiation au moyen de rayonnements ionisants la membrane ainsi imprégnée pour greffer les monomères sur l'élastomère dans toute l'épaisseur de la membrane.

Selon un premier mode de mise en oeuvre du procédé, on réalise l'imprégnation de la membrane en élastomère en immergeant celle-ci dans le monomère à l'état liquide. De préférence, le monomère est à une température allant de la température ambiante à 80°C et on opère éventuellement sous pression pour le maintenir à l'état liquide. Il est avantageux d'opérer à chaud pour obtenir une imprégnation de la membrane sur toute son épaisseur.

Selon un second mode de mise en oeuvre du procédé de l'invention, on réalise l'imprégnation de

la membrane en élastomère en maintenant cette dernière dans la vapeur saturante du monomère.

Dans les deux cas, pour régler à la valeur voulue la quantité de monomères introduite dans la membrane et par conséquent le taux de monomères greffés, on règle la durée d'imprégnation en fonction de la température et de la nature des monomères utilisés.

Dans certains cas, après l'étape d'imprégnation et avant l'étape d'irradiation, on soumet la membrane imprégnée à un traitement à chaud sous pression pour favoriser la diffusion du monomère dans l'épaisseur de la membrane.

En effet, pour obtenir de bonnes caractéristiques mécaniques il est important de maintenir une homogénéité dans toute l'épaisseur de la membrane et de ce fait de réaliser le greffage sur toute son épaisseur.

Ce traitement de diffusion à chaud consiste, par exemple, à maintenir la membrane imprégnée de monomère sous une presse, à une température de 70 à 90°C pendant une durée d'environ deux heures, en utilisant une pression de 1 MPa.

Après l'étape d'imprégnation et éventuellement de traitement de diffusion à chaud de la membrane imprégnée, on soumet cette dernière à une irradiation au moyen de rayonnements ionisants pour greffer les monomères sur l'élastomère et éventuellement réticuler celui-ci lorsqu'on utilise des monomères polyinsaturés, en réalisant ce greffage et éventuellement cette réticulation dans toute l'épaisseur de la membrane.

Les rayonnements ionisants susceptibles d'être utilisés dans ce but sont les rayonnements gamma et les faisceaux d'électrons accélérés, ayant une énergie suffisante pour traverser la membrane.

Pour des membranes ayant une épaisseur d'environ 2 à 4 mm, on utilise avantageusement un faisceau d'électrons accélérés ayant une énergie de 1 à 4 MeV, et généralement de 2 à 3 MeV. La dose d'irradiation nécessaire pour assurer le greffage et/ou la réticulation est généralement comprise entre 3 et 6 Mrad.

Lorsque la membrane est une membrane plane, l'irradiation peut être effectuée en faisant défiler la membrane posée à plat sous le faisceau d'électrons. Lorsque la membrane a une forme plus complexe et se présente, par exemple, sous la forme d'une demi-sphère, l'irradiation est effectuée suivant plusieurs géométries pour obtenir la meilleure homogénéité de doses. Dans tous les cas, on réalise l'irradiation sous atmosphère inerte, par exemple sous atmosphère d'azote.

Les membranes en copolymère greffé et éventuellement réticulé obtenues après irradiation peuvent être utilisées comme éléments séparateurs dans les systèmes hydropneumatiques pour véhicules terrestres et aériens.

En effet, ces membranes présentent par rapport à celles qui existent déjà une diminution de la perméabilité aux gaz qui atteint plusieurs dizaines de % et qui est acquise sans que soient amoindries à un degré incompatible avec l'utilisation envisagée, leurs propriétés mécaniques.

D'autres caractéristiques et avantages de l'invention apparaitront mieux à la lecture des exemples suivants de préparation d'éléments séparateurs selon l'invention, qui sont donnés à titre illustratif et non limitatif.

Dans chacun de ces exemples, on contrôle la perméabilité de l'élément séparateur obtenu en utilisant l'essai faisant l'objet de la norme

ISO 2782 1977 (F) dont les caractéristiques essentielles sont rappelées ci-après.

Un disque d'un diamètre de 54 mm, découpé dans l'élément séparateur obtenu est maintenu dans une cellule d'essai étanche. Sur une des faces de l'élément, on applique une pression relative d'azote constante de 2 bars à une température de 80, 100 ou 120°C. Le volume d'azote diffusé à travers l'élément est calculé à partir des mesures de déplacement $\Delta l$ d'une goutte de liquide non volatil placée dans un capillaire d'un diamètre <u>d</u> de 2,9 mm fermant le côté basse-pression de la cellule d'essai. Les mesures sont effectuées pendant environ 300 minutes à partir du débit constant. La perméabilité Q s'exprime en $m^2/Pa.s.$ selon la formule :

$$Q = \frac{\Delta V}{\Delta t} \times \frac{e}{S} \times \frac{1}{\Delta P}$$

avec $\Delta V$ représentant le volume d'azote recueilli dans ce capillaire au bout du temps $\Delta t$ ; e représentant l'épaisseur de l'élément ; S représentant la section de l'élément soumis à l'essai et $\Delta P$ la pression relative d'azote.

Le volume d'azote $\Delta V$ est égal à $\Delta l \times \frac{\pi d2}{4} \times \frac{273}{\theta}$ avec $\theta$ représentant la température en degrés Kelvin du tube capillaire.

Sur les figures 1 à 4, on a illustré les résultats de perméabilité obtenus dans les exemples par la représentation graphique du déplacement $\Delta l$ en cm de la goutte de liquide dans le capillaire en fonction du temps $\Delta t$ en minutes. On obtient ainsi des droites dont l'angle $\alpha$ avec l'axe des abscisses est représentatif de la perméabilité de l'élément concerné, la valeur de la tangente de l'angle $\alpha$ diminuant avec la perméabilité. Sur ces figures, on a également représenté à titre comparatif la perméabilité d'un élément séparateur constitué par la même membrane

d'élastomère qui n'a pas reçu le traitement de greffage de l'invention.

Sur la figure 1, les droites $D_1$, $D_2$, $D_3$, $D_5$ et $D_7$ illustrent les perméabilités obtenues à 100°C dans les exemples 1, 2, 3, 5 et 7 sur des éléments séparateurs en polyuréthane (Desmopan 385) greffé alors que la courbe D illustre les résultats obtenus avec un élément séparateur en Desmopan 385 non greffé.

Sur la figure 2, les courbes $D_4$, $D_5$ et $D_6$ illustrent les perméabilités obtenues à 120°C dans les exemples 4, 5 et 6 sur des éléments séparateurs en Desmopan 385 greffé alors que la courbe D' illustre les résultats obtenus avec un élément séparateur en Desmopan non greffé.

Sur la figure 3, les courbes $D_8$ à $D_{12}$ illustrent les perméabilités obtenues à 100°C dans les exemples 8 à 12 sur des éléments séparateurs en polyuréthane (UREPAN) greffé selon l'invention alors que la droite D" se rapporte à un élément séparateur en UREPAN non greffé.

Sur la figure 4, les droites $D_{13}$ à $D_{16}$ illustrent les perméabilités obtenues à 100°C avec les éléments séparateurs en polyuréthane (ESTANE) greffé alors que la droite D"' se rapporte à l'élément séparateur en ESTANE non greffé.

<u>Exemple 1</u>

On utilise une membrane plane de 100 x 100 mm et d'une épaisseur de 2,2 mm en polyuréthane connu sous la marque Desmopan 385, qui répond à la formule chimique simplifiée

$$OCN - \Big[(-R-NH-\underset{\underset{O}{\|}}{C}-O-(\text{glycol à chaîne courte})-O-\underset{\underset{O}{\|}}{C}NH-)_m$$

$$(-R-NH\ \underset{\underset{O}{\|}}{C}-O-(\text{polyester ou polyéther})-O-\underset{\underset{O}{\|}}{C}-NH-)_n\Big] -NCO$$

La membrane est immergée pendant trente minutes dans l'acide acrylique à 21°C, puis elle est maintenue sous presse à 80°C pendant deux heures sous une pression 1 MPa. Elle est ensuite irradiée sous enveloppe d'aluminium à une dose de 5 Mrad par des électrons de 2 MeV.

Le taux de monomère greffé (AA) après irradiation est de 9,3% en poids par rapport au poids initial, l'épaisseur de la membrane après traitement est de 2,38 mm. Sa perméabilité à l'azote à 100°C est représenté par la droite $D_1$ de la figure 1. Avant traitement, sa perméabilité QoD était de $158.10^{-18}$ $m^2$/s.Pa et après traitement sa perméabilité Q1 est de $143.10^{-18}$ $m^2$/s.Pa, soit un gain de -9%.

Exemple 2

On traite une membrane en Desmopan 385 identique à celle de l'exemple 1.

La membrane est immergée pendant une heure dans l'acrylate d'éthylène glycol à 30°C, puis une heure à 50°C. La membrane est maintenue deux heures à 80°C et 48 heures à température ambiante sous une pression de 1 MPa. On réalise ensuite l'irradiation sous faisceau d'électrons de 2 MeV à une dose de 5 Mrad. Le taux de monomère greffé (AEG) par irradiation est de 11% en poids par rapport au poids initial de la membrane et l'épaisseur de la membrane est de 2,34 mm.

Sa perméabilité à l'azote à 100°C est représenté par la droite $D_2$ de la figure 1. Sa perméabilité Q2 est de $129.10^{-18}$ $m^2$/s.Pa ; ce qui représente un gain de -18,4%.

Exemple 3

On traite une membrane en Desmopan 385 identique à celle des exemples 1 et 2.

Celle-ci est placée en vapeur saturante de vinylpyrrolidone pendant 24 heures à 60°C, puis irradiée sous électrons de 2 MeV à une dose de 5 Mrad. Le taux de monomère greffé après irradiation ($VPO_2$) est de 6,6% en poids par rapport au poids initial de la membrane et l'épaisseur de la membrane traitée est de 2,40 mm.

Sa perméabilité à l'azote à 100°C est représentée par la droite $D_3$ de la figure 1. Sa perméabilité Q3 est de $131.10^{-18}$ $m^2/s.Pa$, ce qui représente un gain de -17%.

Exemple 4

On traite une membrane en Desmopan 385 identique à celle des exemples précédents.

Cette membrane est maintenue dans la vapeur saturante d'acrylonitrile à 40°C pendant 3 heures. La membrane enveloppée dans une feuille d'aluminium mince est ensuite irradiée sous faisceau d'électrons de 2 MeV à une dose d'irradiation de 5 Mrad.

Le taux de monomère greffé après irradiation (AN) est de 7% en poids par rapport au poids initial de la membrane et l'épaisseur de la membrane traitée est de 2,22 mm.

Sa perméabilité à l'azote à 120°C est représentée par la droite $D_4$ de la figure 2. La perméabilité à 120°C de la membrane non traitée $Q_0(120)$ était de $227.10^{-18}$ $m^2/s.Pa$ et celle de la membrane traitée $Q_4(120)$ de $194.10^{-18}$ $m^2/s.Pa$, ce qui représente un gain de -14,5%.

Exemple 5

On traite une membrane en Desmopan 385 identique à celle des exemples précédents.

Cette membrane est maintenue dans la phase vapeur de l'acrylonitrile à 40°C pendant 5 heures. La membrane enveloppée d'une feuille mince d'aluminium est irradiée sous faisceau d'électrons de 2,5 MeV à une dose de 5 Mrad.



BAD ORIGINAL

Le taux de monomère greffé après irradiation (AN) est de 12% en poids par rapport au poids initial de la membrane et l'épaisseur de la membrane traitée de 2,32 mm.

Sa perméabilité à l'azote à 80°C était de $72.10^{-18}$ $m^2$/s.Pa avant traitement et elle est de $37.10^{-18}$ $m^2$/s.Pa après traitement, soit un gain de -48%.

A 100°C, sa perméabilité à l'azote $Q_5(100)$ est de $122.10^{-18}$ $m^2$/s.Pa, ce qui représente un gain de -22,8%.

A 120°C, sa perméabilité à l'azote est représentée par la droite $D_5$ de la figure 2. Elle était de $227.10^{-18}$ $m^2$/s.Pa avant traitement et elle est de $177.10^{-18}$ $m^2$/s.Pa après traitement, soit un gain de -22%.

Les <u>propriétés mécaniques</u> de la membrane avant et après traitement sont données dans le tableau 1 qui suit.

<u>Tableau 1</u>

| Caractéristiques mécaniques | | Membrane avant traitement | Membrane traitée |
|---|---|---|---|
| - Dureté shore A | (Pts) | 82 | 88 |
| -Dureté DIDC | (Pts) | 81 | 87 |
| - Module d'Young à 100% d'allongement | (MPa) | 5,6 | 6,1 |
| - Module d'Young à 200% d'allongement | (MPa) | 7,3 | 8,9 |
| - Charge à la rupture | (MPa) | 31,8- 36,0 | 42,2 |
| - Allongement à la rupture | ( % ) | 650 - 690 | 665 |
| - Tenue au froid : Gehman T10 | (°C ) | -37 | -32 |

<u>Exemple 6</u>

On traite une membrane en Desmopan 385 identique à celle des exemples précédents.

La membrane est maintenue dans la vapeur saturante d'acrylonitrile à 50°C pendant 1 heure 30 puis la membrane enveloppée dans une mince feuille d'aluminium est irradiée sous faisceau d'électrons accélérés de 2 MeV à une dose de 5 Mrad.

Le taux de monomère greffé après irradiation (AN) est de 15,5% en poids par rapport au poids initial de la membrane et l'épaisseur de la membrane traitée est de 2,53 mm.

Sa perméabilité à l'azote à 120°C est représentée par la droite $D_6$ de la figure 2. Sa perméabilité $Q_6(120)$ est de $174.10^{-18}$ $m^2/s.Pa$, ce qui représente un gain de -23,3%.

Exemple 7

On traite une membrane en Desmopan 385 identique à celle des exemples précédents.

La membrane est immergée dans le diacrylate d'hexane diol à 19°C pendant trois heures, elle est ensuite maintenue sous presse (1 MPa) pendant deux heures à 80°C et 48 heures à la température ambiante. Puis la membrane est irradiée sous faisceau d'électrons accélérés de 2 MeV à une dose de 5 Mrad. Le taux de monomère fixé après irradiation est de 4,3% et l'épaisseur de la membrane traitée est de 2,39 mm.

Sa perméabilité à l'azote à 100°C est représentée par la droite $D_7$ de la figure 1 ; cette perméabilité $Q_7(100)$ est de $140.10^{-18}$ $m^2/s.Pa$, ce qui représente un gain de -11,4%.

Exemple 8

On utilise une membrane plane de 100 x 100 mm et de 2,2 mm d'épaisseur en polyuréthane connue sous la marque UREPAN HU721, qui correspond à la formule chimique simplifiée :

$$NH-\left[O-CO-NH-(CH_2)_4-NH\right]_n-CO-O-$$

On traite cette membrane par l'acide acrylique en utilisant les mêmes conditions d'imprégnation et d'irradiation que dans l'exemple 1.

Les résultats obtenus sont les suivants :

Taux d'acide acrylique greffé : 14,3%

Epaisseur de la membrane après traitement : 2,21 mm

Perméabilité à l'azote à 100°C : figure 3, droite $D_8$

Perméabilité avant traitement QoU(100) : $186.10^{-18}$ $m^2/s.Pa$

Perméabilité après traitement $Q_8(100)$ : $131.10^{-18}$ $m^2/s.Pa$

Gain : -29,6%

Exemple 9

Une membrane identique à celle de l'exemple 8 est immergée dans l'acrylate d'éthylène glycol (AEG) à 30°C pendant une heure.

La membrane est ensuite maintenue deux heures à 80°C et 48 heures à la température ambiante sous une pression de une tonne.

L'irradiation en l'absence d'air est réalisée sous faisceau d'électrons de 2 MeV à une dose de 5 Mrad.

Les résultats obtenus sont les suivants :

Taux d'AEG greffé : 6,6%

Epaisseur de la membrane après traitement : 2,43 mm

Perméabilité à l'azote à 100°C : figure 3, droite $D_9$

Perméabilité après traitement $Q_9(100)$ : $136.10^{-18}$ $m^2/s.Pa$

Gain : -27%

Exemple 10

Une membrane identique à celle des exemples 8 et 9 est traitée par la vinyl pyrrolidone ($VPO_2$) en suivant la technique de l'exemple 3.

Les résultats obtenus sont les suivants :

Taux de $VPO_2$ greffé : 8,1%

Epaisseur de la membrane après traitement : 2,20 mm

Perméabilité à l'azote à 100°C : figure 3, droite $D_{10}$
Perméabilité après traitement $Q_{10}(100)$ : $175.10^{-18}$ $m^2/s.Pa$

Gain : -5,9%

Exemple 11

Une membrane identique à celle des exemples 8 à 10 est traitée comme dans l'exemple 5.

Les résultats obtenus sont les suivants :
Taux d'acrylonitrile greffé : 10%
Epaisseur de la membrane après traitement : 2,8 mm
Perméabilité à l'azote à 80°C :
Membrane avant traitement $Q_0(80)$ : $63.10^{-18}$ $m^2/s.Pa$
Membrane après traitement $Q_{11}(80)$ : $30.10^{-18}$ $m^2/s.Pa$

Gain : -52%

Perméabilité à l'azote à 100°C : figure 3, courbe $D_{11}$
Membrane après traitement $Q_{11}(100)$ : $142.10^{-18}$ $m^2/s.Pa$

Gain : -23,7%

Propriétés mécaniques : (tableau 2)

Tableau 2

| | | Membrane avant traitement | Membrane traitée |
|---|---|---|---|
| - Dureté shore A | (Pts) | 78 | 78 |
| - Dureté DIDC | (Pts) | 77 | 76 |
| - Module d'Young à 100% d'allongement | (MPa) | 6,2 | 8,0 |
| - Charge à la rupture | (MPa) | 22,8 | 24,0 |
| - Allongement à la rupture | ( % ) | 380 | 280 - 350 |
| - Tenue au froid : Gehman T10 | (°C ) | -28,5 | -27 |

Exemple 12

Une membrane identique à celle des exemples 8 et 11 est traitée comme dans l'exemple 7.

Les résultats obtenus sont les suivants :
Taux diacrylate d'hexane diol fixé : 7,9%
Epaisseur de la membrane après traitement : 2,18 mm
Perméabilité à l'azote à 100°C : figure 3, droite $D_{12}$
Perméabilité après traitement $Q_{12}(100)$ : $123.10^{-18}$ $m^2/s.Pa$

Gain : -33,9%

Exemple 13

Une membrane en polyuréthane connue sous la marque Estane de 100 x 100 mm et de 2,2 mm d'épaisseur est traitée par l'acide acrylique selon les conditions des exemples 1 et 8.

Les résultats sont les suivants :
Taux d'acide acrylique greffé : 7,3%
Epaisseur de la membrane après traitement : 2,21 mm
Perméabilité à l'azote à 100°C : figure 4, droite $D_{13}$
Perméabilité avant traitement $Q_0(100)$ : $149.10^{-18}$ $m^2/s.Pa$
Perméabilité après traitement $Q_{13}(100)$ : $138.10^{-18}$ $m^2/s.Pa$

Gain : -7,4%

Exemple 14

Une membrane identique à celle de l'exemple 13 est traitée par l'acrylate d'éthylène glycol en suivant la technique de l'exemple 2.

Les résultats obtenus sont les suivants :
Taux d'acrylate d'éthylène glycol greffé : 7,7%
Epaisseur de la membrane après traitement : 2,2 mm
Perméabilité à l'azote à 100°C : figure 4, droite $D_{14}$
Perméabilité après traitement $Q_{14}(100)$ : $121.10^{-18}$ $m^2/s.Pa$

Gain : -18,8%

Exemple 15

Une membrane identique à celle des exemples 13 et 14 est traitée par l'acrylonitrile en suivant la méthode utilisée dans les exemples 5 et 11.



BAD ORIGINAL

Les résultats obtenus sont les suivants :

Taux d'acrylonitrile greffé : 15%

Epaisseur de la membrane greffée : 2,25 mm

Perméabilité à l'azote à 80°C

Perméabilité avant traitement $Q_0(80)$ : $44.10^{-18}$ $m^2/s.Pa$

Perméabilité après traitement $Q_{15}(80)$ : $28.10^{-18}$ $m^2/s.Pa$

Gain : -36%

Perméabilité à l'azote à 100°C : figure 4, droite $D_{15}$

Perméabilité après traitement $Q_{15}(100)$ : $125.10^{-18}$ $m^2/s.Pa$

Gain : -16,1%

<u>Propriétés mécaniques</u> : (tableau 3)

Tableau 3

| | | Membrane avant traitement | Membrane traitée |
|---|---|---|---|
| - Dureté shore A | (Pts) | 88 | 89 |
| - dureté DIDC | (Pts) | 89 | 87 |
| - Module d'Young à 100% d'allongement | (MPa) | 7,4 | 7,4 |
| - Module d'Young à 200% d'allongement | (MPa) | 12,5 | 14,1 |
| - Charge à la rupture | (MPa) | 24,7 | 30,2 |
| - Allongement à la rupture | ( % ) | 520 | 560 |
| - Tenue au froid | ( °C) | -27,5 | -26 |

<u>Exemple 16</u>

Une membrane identique à celle des exemples 13 à 15 est traitée par le diacrylate d'hexane diol en suivant la technique utilisée pour les exemples 7 et 12.

Les résultats obtenus sont les suivants :
Taux de diacrylate d'hexane diol fixé : 3%
Epaisseur de la membrane après traitement : 2,17 mm
Perméabilité à l'azote à 100°C : figure 4, droite $D_{16}$
Perméabilité après traitement $Q_{16}(100)$ : $130.10^{-18}$ $m^2/s.Pa$

Gain : -12,7%

Dans le tableau 4 joint, on a regroupé les résultats obtenus dans les exemples donnés ci-dessus.

Au vu de ce Tableau, on constate que les meilleurs résultats sont obtenus lorsqu'on utilise l'acrylonitrile comme monomère de greffage.

TABLEAU - 4

| MEMBRANE | UREPAN | | | | | ESTANE | | | | |
|---|---|---|---|---|---|---|---|---|---|---|
| Monomère greffé | taux de monomère fixé (en %) | Perméabilité à l'azote à 80° (en $m^2$:s.Pa x $10^{-18}$) | | à 100° | | taux de monomère fixé (en %) | Perméabilité à l'azote 80°C (en $m^2$/s.Pa x $10^{-18}$) | | 100°C | |
| | | Q | Gain | Q | Gain | | Q | Gain | Q | Gain |
| Non traité | | 63 (0 80) | | 186 (0 100) | | | 44 ($0_E$80) | | 149 ($0_E$100) | |
| Acide acrylique | 14,3 | | | 131 | 29,6% | 7,3 | | | 138 | 7,4% |
| Acrylate d'éthylène glycol | 6,6 | | | 136 | 27 % | 7,7 | | | 121 | 18,8% |
| Vinyl pyrrolidone | 8,1 | | | 175 | 5,9% | | | | | |
| Acrylonitrile | 10 | 30 | 52% | 142 | 23,7% | 15 | 28 | 36% | 125 | 16,1% |
| Diacrylate d'hexane diol | 7,9 | | | 123 | 33,9% | 3 | | | 130 | 12,7% |

## TABLEAU - 4 (SUITE)

| MEMBRANE | DESMOPAN | | | | | | |
|---|---|---|---|---|---|---|---|
| Monomère greffé | taux de monomère fixé (en %) | Perméabilité à l'azote en $m^2/s.Pa \times 10^{-18}$ | | | | | |
| | | 80° | | 100° | | 120° | |
| | | Q | Gain | Q | Gain | Q | Gain |
| Non traité | | 72 ($0_D80$) | | 158 ($0_D100$) | | 227 ($0_D120$) | |
| Acide acrylique | 9,3 | | | 143 | 9 % | | |
| Acrylate d'éthylène glycol | 11 | | | 129 | 18,4 % | | |
| Vinyl pyrrolidone | 6,6 | | | 131 | 17 % | | |
| Acrylonitrile | 7 | | | | | 194 | 14,5% |
| | 12 | 37 | 48% | 122 | 22,8 % | 177 | 22 % |
| | 15,5 | | | | | 174 | 23,3% |
| Diacrylate d'hexane diol | 4,3 | | | 140 | 11,4 % | | |

REVENDICATIONS

1. Elément séparateur, caractérisé en ce qu'il comprend une membrane en élastomère choisi dans le groupe comprenant les polyuréthanes, les polychloroprènes, les silicones, les polymères éthylène-acryliques tels que les copolymères d'éthylène et d'acrylate de méthyle, les polyisobutylènes, les polynorbornènes, les polybutadiène-acrylonitriles, les polybutadiènes, les polyisobutylène-isoprènes, les polyisoprènes, les polyéthylènes chlorosulfonés, les poly (éthylène-propylène), les poly (éthylène-propylène-diène) et les poly-sulfures d'éthylène, ledit élastomère étant greffé par des monomères monoinsaturés et/ou polyinsaturés choisis dans le groupe comprenant l'acide acrylique, l'acrylate d'éthylène glycol, l'acrylonitrile, la vinylpyrrolidone, le diacrylate d'hexane diol, le diacrylate de diéthylène glycol, le diacrylate de tétraéthylène glycol et le diacrylate de polyéthylène glycol.

2. Elément selon la revendication 1, caractérisé en ce que le taux de monomères greffés est de 2 à 30% en poids par rapport au poids d'élastomère.

3. Elément selon l'une quelconque des revendications 1 et 2, caractérisé en ce que la membrane est en polyuréthane greffé par l'acrylonitrile.

4. Procédé pour préparer un élément séparateur selon l'une quelconque des revendications 1 à 3, caractérisé en ce que l'on imprègne une membrane en élastomère choisi dans le groupe comprenant les polyuréthanes, les polychloroprènes, les silicones, les polymères éthylène-acryliques tels que les copolymères d'éthylène et d'acrylate de méthyle, les polyisobutylènes, les polynorbornènes, les polybutadiène-acrylonitriles, les polybutadiènes, les polyisobutylène-isoprènes, les polyisoprènes, les polyéthylènes

chlorosulfonés, les poly (éthylène-propylène), les poly (éthylène-propylène-diène) et les poly-sulfures d'éthylène, par des monomères monoinsaturés et/ou polyinsaturés choisis dans le groupe comprenant l'acide acrylique , l'acrylate d'éthylène glycol, l'acrylonitrile, la vinylpyrrolidone, le diacrylate d'hexane diol, le diacrylate de diéthylène glycol, le diacrylate de tétraéthylène glycol, et le diacrylate de polyéthylène glycol, et en ce que l'on soumet à une irradiation au moyen de rayonnements ionisants la membrane ainsi imprégnée pour greffer les monomères sur l'élastomère dans toute l'épaisseur de la membrane.

5. Procédé selon la revendication 4, caractérisé en ce que l'on réalise l'imprégnation en immergeant ladite membrane en élastomère dans le monomère à l'état liquide.

6. Procédé selon la revendication 5, caractérisé en ce que le monomère est à une température allant de la température ambiante à 80°C.

7. Procédé selon la revendication 6, caractérisé en ce que l'on réalise l'imprégnation en maintenant ladite membrane en élastomère dans la vapeur saturante du monomère.

8. Procédé selon l'une quelconque des revendications 4 à 7, caractérisé en ce que avant irradiation, on soumet la membrane en élastomère imprégnée de monomère à un traitement à chaud sous pression pour favoriser la diffusion du monomère dans l'épaisseur de la membrane.

9. Procédé selon l'une quelconque des revendications 4 à 8, caractérisé en ce que l'irradiation est réalisée au moyen d'un faisceau d'électrons accélérés d'énergie comprise entre 1 et 4 MeV.

10. Procédé selon la revendication 9, caractérisé en ce que la dose d'irradiation est de 3 à 6 Mrad.

11. Application au système de suspension hydropneumatique pour véhicules terrestres et aériens de l'élément séparateur en élastomère selon l'une quelconque des revendications 1 à 3.

0077227

1,2

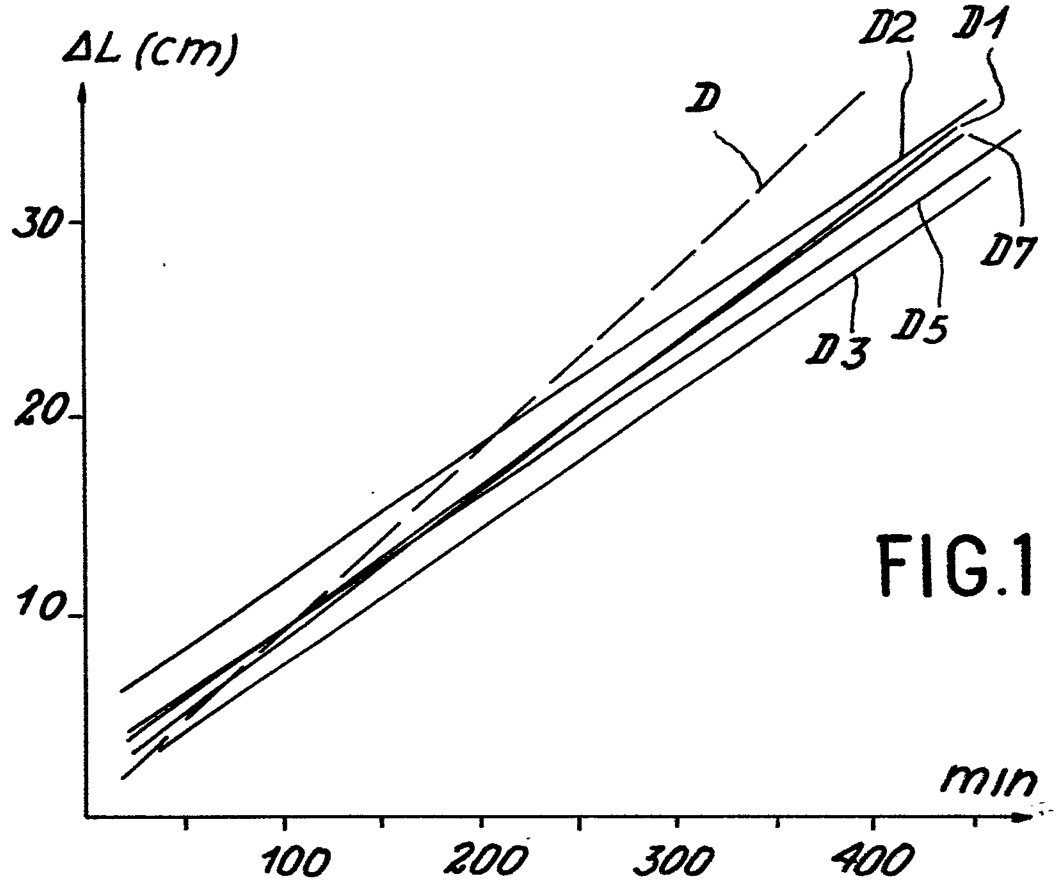


FIG.1

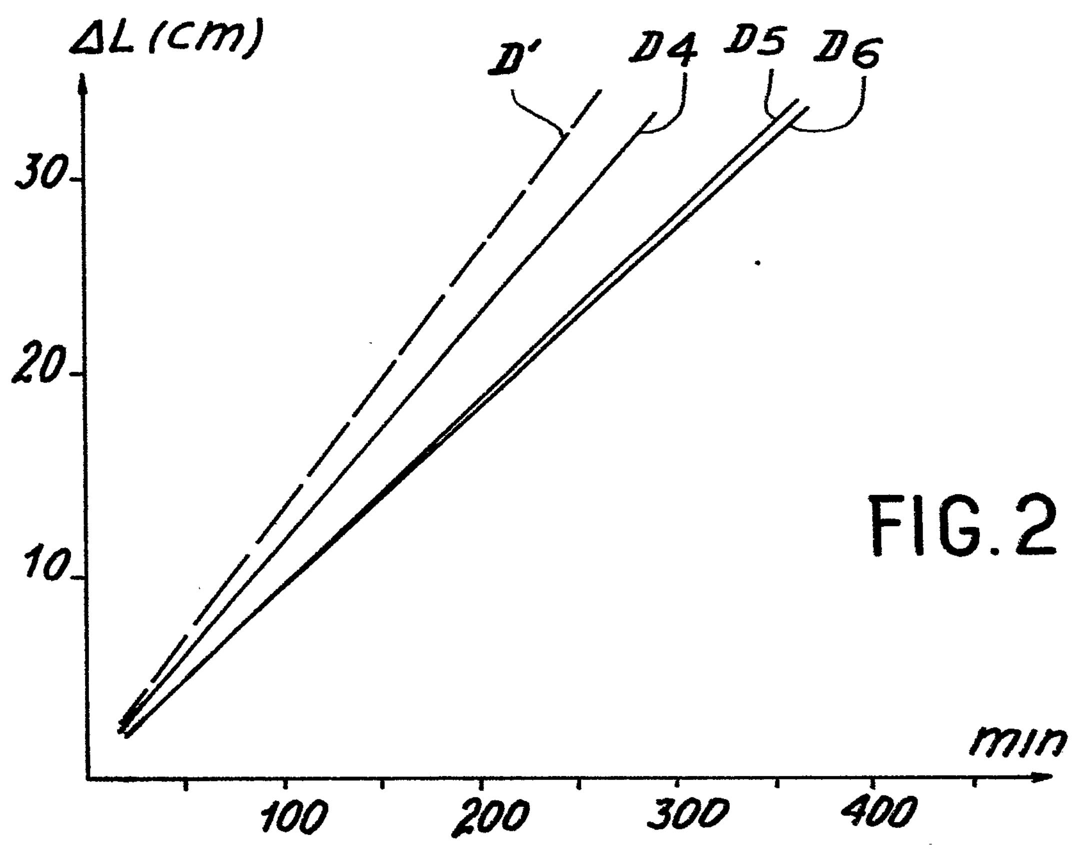


FIG.2

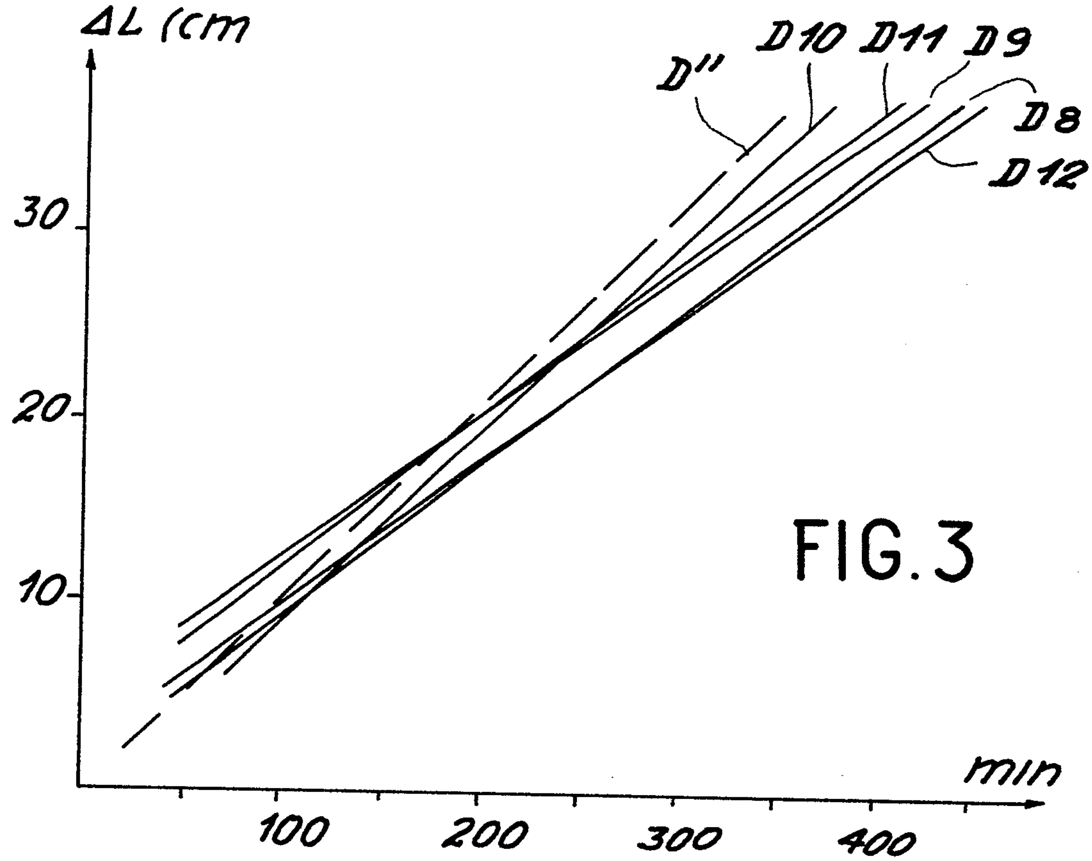
ΔL (cm
D''
D10
D11
D9
D8
D12
30
20
10
min
100
200
300
400

FIG.3

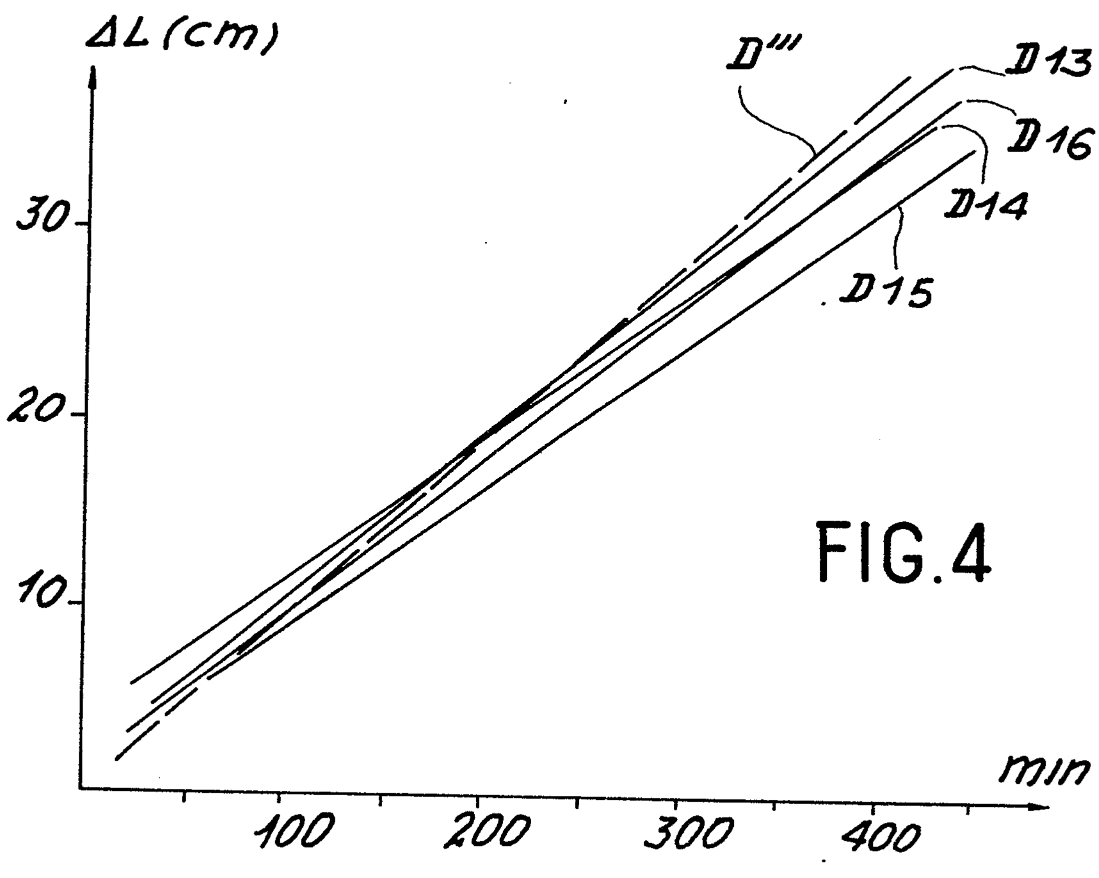
ΔL (cm)
D'''
D13
D16
D14
D15
30
20
10
min
100
200
300
400

FIG.4

0077227

Office européen des brevets

## RAPPORT DE RECHERCHE EUROPEENNE

Numéro de la demande

EP 82 40 1675

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | FR-A-2 250 793 (COMMISSARIAT A L'ENERGIE ATOMIQUE) *Revendications 1,7,8,10* | 1,2,4, 5 | C 08 J 7/18<br>C 08 F 291/02<br>F 16 F 9/08 |
| X | CHEMICAL ABSTRACTS, vol. 80, no. 26, 1 juillet 1974, page 22, no. 146823u, Columbus Ohio (USA); & JP - A - 73 17 667 (KURARAY CO., LTD.) (31-05-1973) *Résumé* | 1,2,4-6 | |
| A | FR-A-1 244 671 (U.S.RUBBER) | | |
| A | US-A-3 389 098 (H.M.GLADSTONE et al.) | | |

DOMAINES TECHNIQUES RECHERCHES (Int. Cl. 3)

C 08 F
C 08 J
F 16 F

Le présent rapport de recherche a été établi pour toutes les revendications

| Lieu de la recherche | Date d'achèvement de la recherche | Examinateur |
|---|---|---|
| LA HAYE | 14-12-1982 | MEULEMANS R.A.M.G.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82